# EUROPEAN PATENT SPECIFICATION

(11) **EP 3 455 092 B1**
(45) Date of publication and mention of the grant of the patent: **27.05.2020**
(21) Application number: 17729368.5
(22) Date of filing: 12.05.2017
(51) Int. Cl.: B60D 1/58, B60R 9/06, B60D 1/06, B60R 3/00

(54) **STEP PLATFORM DEVICE FOR CONNECTION TO A TRAILER HITCH BALL**
STUFENPLATTFORMVORRICHTUNG ZUM ANSCHLUSS AN EINE ANHÄNGERKUPPLUNGSKUGEL
DISPOSITIF DE PLATEFORME DE MARCHE PERMETTANT LE RACCORDEMENT À UNE BOULE D'ATTELAGE DE REMORQUE

(30) Priority: 13.05.2016 NO 20160818
(43) Date of publication of application: 20.03.2019
(73) Proprietor: Bakmark, Ole, 9022 Krokelvdalen (NO)
(72) Inventor: Bakmark, Ole, 9022 Krokelvdalen (NO)
(74) Representative: Onsagers AS
(86) International application number: PCT/EP2017/061493
(87) International publication number: WO 2017/194754

(56) References cited:
- WO-A1-2010/128195
- WO-A1-2015/113877
- US-A1- 2013 320 058

## Description

### FIELD OF THE INVENTION

The present invention relates to a step platform device for connection to a trailer hitch ball of a vehicle.

### BACKGROUND OF THE INVENTION

Different types of equipment such as skis, bikes etc. are fastened to the roof rack of a vehicle, such as a car. The equipment may be fastened directly to the roof rack or the equipment may be stored into a rooftop cargo carrier such as a ski box.

Other types of roof-fastened equipment includes tools and materials for workmen, for example ladders, boards, beams, pipes etc.

It is often difficult to access such equipment when standing on the ground adjacent to the vehicle. One way of accessing the equipment is to open a side door of the vehicle and stand on the doorstep of the vehicle. It is also known step platform devices for connection to the tires of the vehicle, and then use stand on the step platform device to get access to the equipment. One disadvantage of such solutions is that the driver must remember to disconnect the step platform device from the tire before driving the vehicle.

From US 2011/285104 it is known a step platform device for connection to a trailer hitch of a vehicle. The step platform device comprises several parts, a first base part which must be fixed to the trailer hitch, a second platform part removably connectable to the first base part by means of a third part (a locking pin). This step platform device is cumbersome to use, and there is a huge risk for loosing some of the parts, in particular the locking pin, for example in winter conditions (snow). In particular for workmen vehicles, there can be a need for using a trailer as well as the step platform device several times during a day, and in such situations there will be many connections/disconnections of the step platform device.

From WO 2013/154884 it is known a step platform device which is more or less permanently connected to the trailer hitch of a vehicle. Here, the platform step is provided below the trailer hitch ball, such that the trailer can be connected to the trailer hitch ball without removing the step platform device. Due to the relatively lower height, persons will often find themselves standing on the trailer hitch ball itself. For safety reasons this is not a desired solution, as the trailer hitch ball may be slippery in wet or snowy conditions, and only one foot may be placed onto this ball.

US 2013/320058 describes a hitch-ball type carry device includes a base, a clamp unit and a support unit. The base has a reception member which has two side plates. The clamp unit has a guiding member and two through holes. The support unit has a bar, a positioning part and a support frame, wherein the positioning part and the clamp unit are connected to the base. The clamp unit and the reception member are separated from or mounted to the bitch ball by pivoting the support frame to operate a link unit connected to the base.

WO 2010/128195 describes a step board fastenable in the towing hitch of a vehicle. The step board according to the invention includes a middle body, in which there are an opening and a space for the towing hitch, which middle body includes one or more movable sleeves towards the opening, and the step board includes halves on both sides of the middle body, rotatably fastened in the middle body and a sleeve transfer mechanism which is arranged to transfer the sleeve/sleeves against the towing hitch and to lock the step board against the towing hitch when the halves are turned mainly horizontal.

WO 2015/113877 describes a step apparatus comprises a platform with a fastener for gripping onto, and removal from, the ball of a conventional hitch. It allows easy access to a vehicle such as a delivery van. A socket received a ball of a hitch, and a U-shaped bracket surrounds the neck and lower surface of the ball. This arrangement allows the apparatus to fit onto a wide range of ball hitches in an effective and convenient manner. The apparatus may be used as a step for convenient access to the rear of a vehicle such as a van, or it may be used as a standing platform to achieve an elevated view at an event for example.The object of the present invention is to provide an alternative and improved step platform device, where the above disadvantages are avoided. One object is to provide a step platform device which, when mounted, is taller than the trailer hitch ball. Another object is that the step platform device should be easy to mount to the vehicle and easy to detach from the vehicle. Another object of the invention is that the mounting and detaching operation should not require the step platform device to be separated into several parts.

Another object of the invention is that the step platform device may be mounted to the vehicle during driving, i.e. that vibrations occurring during driving will not cause the step platform device to fall off. This is particularly desirable if the platform device is covered with dirt, mud etc. which makes it less tempting to take the step platform device off the trailer hitch ball and put it in the car.

Another object of the invention is that it should be difficult to steal the step platform device when mounted to the vehicle. Hence, one object is to be able to use a key or code or mechanism to lock the step platform device.

### SUMMARY OF THE INVENTION

The present embodiment relates to a step platform device for connection to a trailer hitch ball, the step platform device comprising:
- a trailer hitch ball connection device comprising first and second connection elements pivotably connected to each other by means of a first connection device about a first axis; where the trailer hitch ball connection device comprises a ball connection interface comprising a first subinterface provided on the first connection element and a second subinterface provided on the second connection element;
- a platform device provided above the trailer hitch ball connection device; where the platform device comprises an upwardly facing step surface and a platform element provided below the step surface;
- a link device comprising a link element;
characterized in that:
- the platform element and the first connection element are pivotably connected to each other about a second axis by means of a second connection device;
- the link element and the second connection element are pivotably connected to each other about a third axis by means of a third connection device;
- the platform element and the link element are pivotably connected to each other about a fourth axis by means of a fourth connection device;
- the step platform device is configured to be provided in a closed state and in an open state, where the ball connection interface may be connected onto the trailer hitch ball in the closed state and where the ball connection interface may be moved away from the trailer hitch ball in the open state;
- the step platform device is configured to be brought from the closed state to the open state by moving the first and fourth connection devices away from each other, thereby causing the second and third connection devices to move towards each other;
- the step platform device is configured to be brought from the open state to the closed state by moving the first and fourth connection devices towards each other, thereby causing the second and third connection devices to move away from each other;
- the connection interface is provided below the first connection device and where the second and third connection devices are provided above the first connection device.

Hence, a person may easily connect the step platform device to the trailer hitch ball of a vehicle and put his foot or both feet onto the step surface to get access to roof-fastened equipment of the vehicle.

In one aspect, the first, second, third and fourth axis are provided at a distance from each other both in the open state and in the closed state.

In one aspect, the link element and the platform element are provided substantially in parallel with each other in the closed state.

In one aspect, the fourth axis is provided a distance d below a level P of the second and third axis in the closed state.

In one aspect, the platform element comprises a U-shaped bracket, having two spaced apart side walls connected to each other by means of a cross member.

In one aspect, the upwardly facing step surface is provided on a top element connected to the platform element.

In one aspect, the top element comprises a friction reducing layer.

In one aspect, the top element is connected to the platform element via a rigid supporting element.

In one aspect, the link device comprises a first type of handle connected to the link element.

In one aspect, a second type of handle is provided in an end of the platform device being distal to the second connection device. It is of course possible to provide the device with both types of handles.

In one aspect, the trailer hitch ball connection device comprises a third connection element, where the third connection element is pivotably connected to the first connection element by means of the first connection device and where the third connection element is rigidly or pivotably connected to the second connection device by mean of a fifth connection device.

In one aspect, the device comprises a locking device for locking the step platform device in the closed state.

In one aspect, the locking device comprises:
- a locking element connected to, and axially displaceable in relation to, the link element, where the locking element comprises an end recess;
- a locking bolt adapted to be received in the end recess of the locking element;
where axial displacement of the locking element in relation to the link element in a first direction is moving the end recess out from engagement with the locking bolt.

In one aspect, the device comprises a locking mechanism and a hook connected to the locking mechanism, where the hook is configured to be hooked onto or hooked off the fastening device when the device is in its locked state, thereby preventing a movement of the first and fourth connection devices away from each other.

### DETAILED DESCRIPTION

Embodiments of the invention will now be described with reference to the enclosed drawings, where:
Fig. 1a shows a perspective view of a first embodiment of the invention;
Fig. 1b illustrates a simplified perspective view of the embodiment in fig. 1a;
Fig. 2 illustrates a side view of a trailer hitch;
Fig. 3 illustrates an exploded side view of a second embodiment;
Fig. 4 illustrates a side view of the second embodiment in the closed state, as seen along line B-B of fig. 6;
Fig. 5 illustrates a side view of the second embodiment in the open state;
Fig. 6 illustrates a cross sectional view of the second embodiment as seen along line A-A of fig. 4;
Fig. 7 illustrates an alternative embodiment in the open state;
Fig. 8 illustrates yet an alternative embodiment in the open state;
Fig. 9 illustrates yet an alternative embodiment in the closed state;
Fig. 10 illustrates the embodiment of fig. 9 in the open state;
Fig. 11 illustrates an exploded perspective view of the embodiment in fig. 9;
Fig. 12 illustrates a perspective view from below of yet an alternative embodiment, where the fastening devices are removed;
Fig. 13a and 13b illustrate yet an alternative embodiment in open and closed states respectively;
Fig. 14 illustrates a perspective rear view of the embodiment of fig. 13a and 13b, where some parts are removed to show details of the locking device and a theft preventing device;
Fig. 15a illustrates a perspective view from below of the locking mechanism and parts of the walls of the second connection element;
Fig. 15b corresponds to fig. 15a, where a locking rod has been removed;
Fig. 15c illustrates a perspective view from below of the locking mechanism removed away from the second connection element.

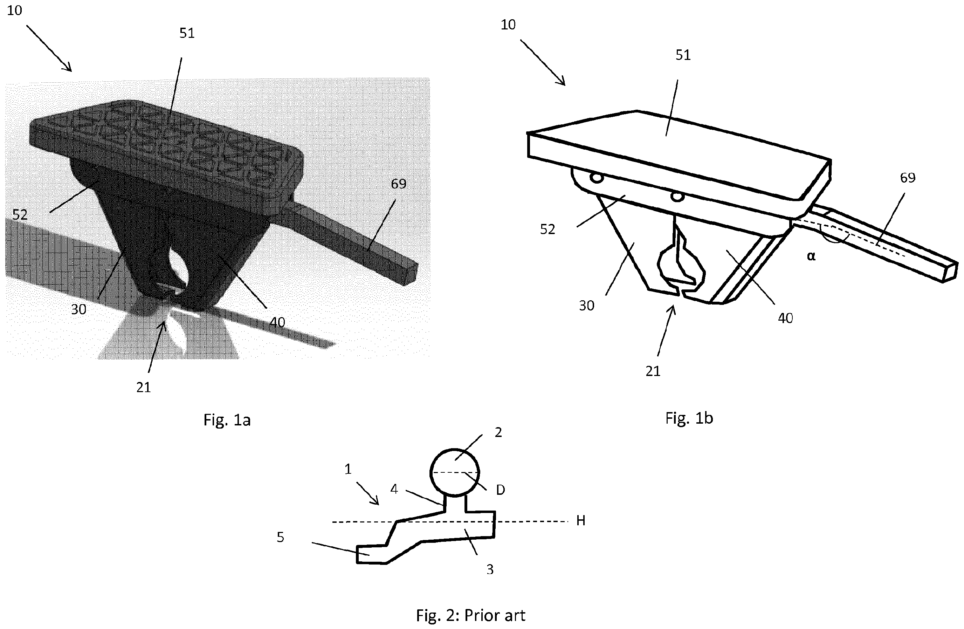

First, it is referred to fig. 2, illustrating a trailer hitch 1 schematically. The trailer hitch comprises a trailer hitch ball 2 connected to a base structure 3 via its neck section 4, where the base structure 3 is connected to a vehicle (not shown) by means of a connection interface 5. It should be noted that there are several producers of such trailer hitches 1, and hence there are many variations of the design and function of the base structure 3 and connection interface 5, since these parts must be adapted to the vehicle they are mounted to. Moreover, it should be noted that the diameter and shape of the trailer hitch ball 2 itself may vary, for example in Europe the standard diameter (indicated by dashed line D in fig. 2) is 50 mm, while other countries have other standard diameters. It should be noted that the trailer hitch 1 is considered to be well known for a skilled person in the art.

It should be noted that in the description below, the term "above", "below", "over", "under", "top", "bottom" etc. are used referring to the orientation of the step platform device when being mounted to a trailer hitch 1 of a vehicle provided on a horizontal surface. As is known, the trailer hitch 1 is oriented with its trailer hitch ball 2 protruding generally upwards from (a horizontal line H through) the base structure 3.

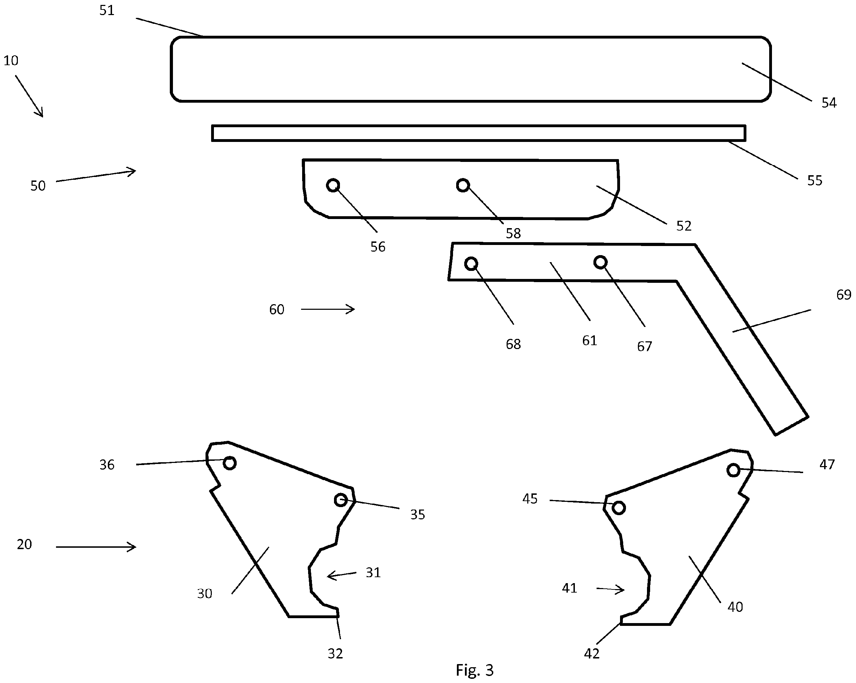

It is now referred to fig. 3, 4, 5 and 6. Here, it is shown a step platform device 10 for connection to the trailer hitch ball 2 of fig. 2.

The step platform device 10 comprises a trailer hitch ball connection device 20 comprising first and second connection elements 30, 40, a platform device 50 and a link device 60.

### About the first and second connection elements 30, 40

The first and second connection elements 30, 40 are pivotably connected to each other by means of a first connection device 15 about a first axis A1. The trailer hitch ball connection device 20 comprises a ball connection interface 21 for connection to the trailer hitch ball 2. This ball connection interface 21 is formed by two parts, a first subinterface 31 provided on the first connection element 30 and a second subinterface 41 provided on the second connection element 40. The ball connection interface 21 is preferably forming the lowermost part of the step platform device 10.

The shape of the subinterfaces 31, 41 are adapted to the trailer hitch ball 2 and to be clamped onto the trailer hitch ball 2. The lowermost parts 32, 42 of the subinterfaces 31, 41 is preferably adapted to be clamped to the neck section 4 of the trailer hitch 1.

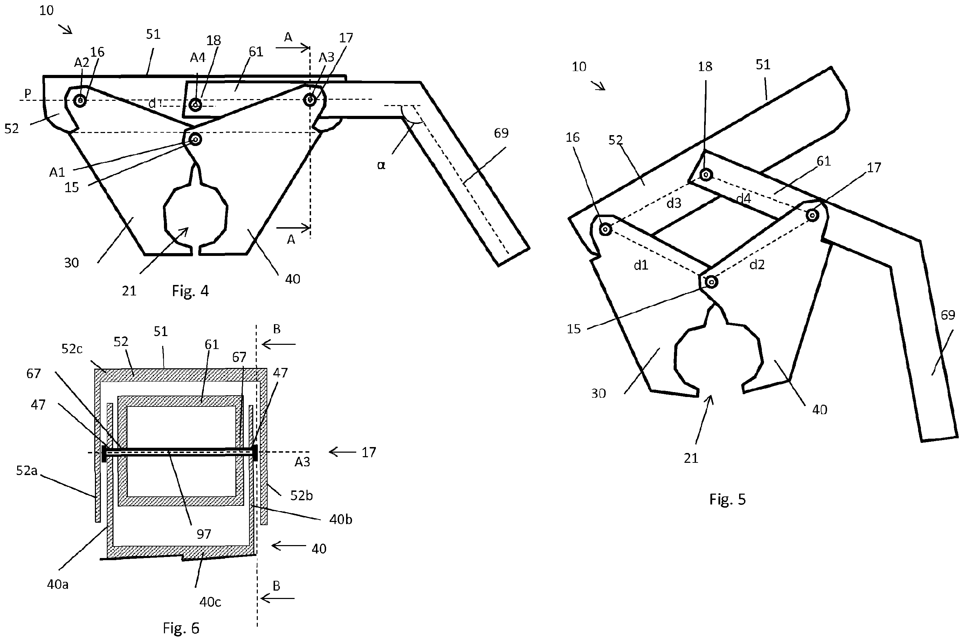

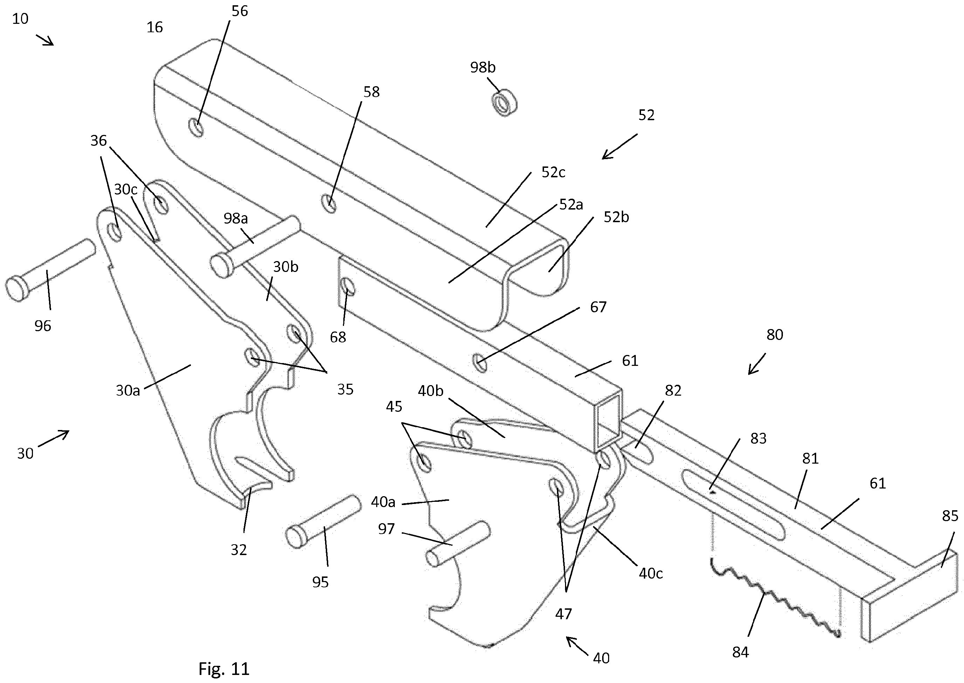

The first and second connection elements 30, 40 may be equal to each other or substantially equal to each other. In fig. 6 and 11 it is shown that the second connection element 40 comprises a U-shaped bracket, having two spaced apart, side walls 40a, 40b fixed to each other by means of a cross member 40c. The side walls 40a, 40b are oriented in parallel to each other.

In fig. 11 it is shown that the first connection element 30 comprises a U-shaped bracket, having two spaced apart side walls 30a, 30b fixed to each other by means of a cross member 30c. The side walls 30a, 30b are oriented in parallel to each other. The first connection element 30 comprises connectors 35, 36 while the second connection element 40 comprises connectors 45, 47. The connectors 35, 36 and 45, 47 are provided in the side walls 30a, 30b, 40a, 40b of the U-shaped brackets forming the first and second connection elements 30, 40.

The connectors 35, 45 are forming the first connection device 15, together with a fastening device 95 (shown in fig. 11).

### About the platform device 50

The platform device 50 comprises an upwardly facing step surface 51 and a platform element 52 provided below the step surface 51. Also the platform element 52 is comprising a U-shaped bracket, having two spaced apart side walls 52a, 52b fixed to each other by means of a cross member 52c. This is best shown in fig. 11. The side walls 52a, 52b are protruding downwardly from the cross member 52c.

In fig. 6, it is shown that the two spaced apart, side walls 40a, 40b of the second connection element 40 are provided between the two spaced apart side walls 52a, 52b. The platform device 50 is provided above the trailer hitch ball connection device 20. Hence, the step platform where the user is placing his foot is provided above the ball 2.

The platform element 52 comprises connectors 56, 58 provided in the side walls 52a, 52b of the U-shaped bracket. In fig. 1a, 1b and fig. 3, it is shown that the upwardly facing step surface 51 of the platform device 50 is provided on a top element 54 connected to the platform element 52. This top element 54 may for example be provided with or as a friction reducing layer. The friction reducing layer may for example be a rubber layer or another layer of a suitable material. As shown in fig. 3, the horizontal length of the top element 54 is larger than the horizontal length of the platform element 52. If the strength of the top element 54 is not sufficient alone to support the desired weight, the top element 54 is connected to the platform element 52 via a rigid supporting element 55. Hence, it is possible to provide a rather long step platform device 10.

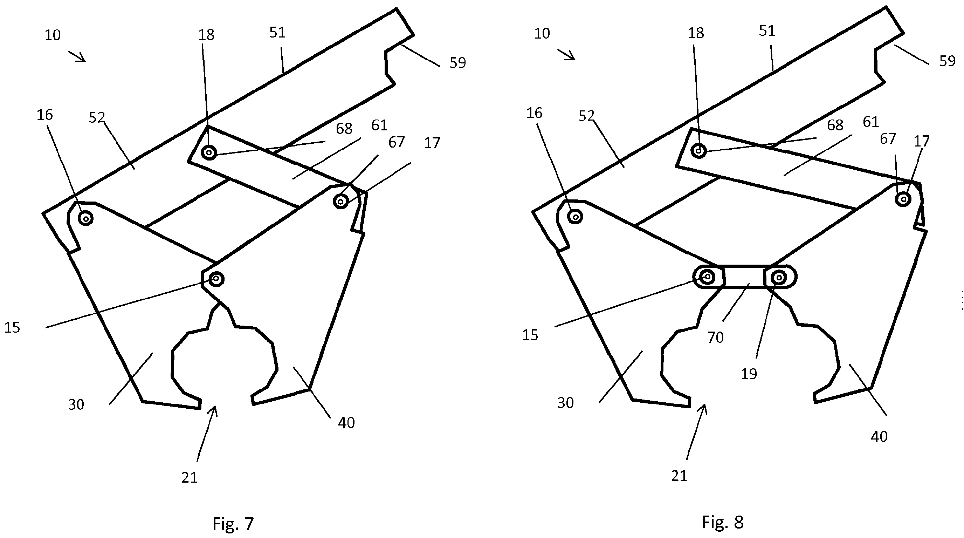

In the alternative embodiments shown in fig. 7 and 8, the platform device 50 comprises a handle 59. The handle 59 is provided in the end of the platform device 50 being distal to the second connection device 16, i.e. the fourth connection device 18 is provided between the handle 59 and the second connection device 16.

### About the link device 60

The link device 60 comprises a link element 61, where two connectors 67, 68 are provided on the link element 61 (fig. 3). The link element 61 may be formed by a section of square pipe (fig. 6).

In the embodiments of fig. 1a, 1b, 3, 4 and 5, the link device 60 comprises a handle 69 connected to the link element 61. The handle 69 may be oriented with an angle α in relation to the link element 61. Preferably, the angle is between 180° - 90°, more preferably between 130° -100°. In fig. 1b, this angle α is indicated as being ca 170°. In fig. 4, this angle α is indicated as being ca 120°.

The handle 69 is provided in an end of the link device 60 being distal to the fourth connection device 18, i.e. the third connection device 17 is provided between the handle 69 and the fourth connection device 18.

In the alternative embodiments shown in fig. 7 and 8, the link device 60 does not comprise a handle. Here, the link device 60 only comprises a link element 61 with the connectors 67, 68 in the respective ends thereof.

### Assembly of the step platform device

It is now referred to fig. 3, 4 and 5. As mentioned above, the first and second connection elements 30, 40 are pivotably connected to each other by means of a first connection device 15 about a first axis A1.

The platform element 52 and the first connection element 30 are pivotably connected to each other about a second axis A2 by means of a second connection device 16. The second connection device 16 is formed by the connectors 56, 36, together with a fastening device 96 (shown in fig. 11).

The link element 61 and the second connection element 40 are pivotably connected to each other about a third axis A3 by means of a third connection device 17. The third connection device 17 is formed by the connectors 67, 47, together with a fastening device 97 (shown in fig. 6 and 11).

The platform element 52 and the link element 61 are pivotably connected to each other about a fourth axis A4 by means of a fourth connection device 18. The fourth connection device 18 is formed by the connectors 58, 68, together with a fastening device 98 (shown in fig. 11). It should be noted that in fig. 11, the fastening device 98 is shown as fastening elements 98a and 98b which will be described in detail below.

The first, second, third and fourth axis A1, A2, A3, A4 are provided at a distance from each other both in the open state and in the closed state. Hence, the first, second, third and fourth connection devices 15, 16, 17, 18 are also provided at a distance from each other both in the open state and in the closed state. Preferably, the distance d1 between the first and second connection devices 15, 16, the distance d2 between the first and third connection devices 15, 17, the distance d3 between the second and fourth connection devices 16, 18 and the distance d4 between the third and fourth connection devices 17, 18 are equal to each other. However, other and different distances are also possible. The first, second, third and fourth axis A1, A2, A3, A4 are typically parallel to each other.

The link element 61 and the platform element 52 are provided substantially in parallel with each other in the closed state.

It is now referred to fig. 6 and 11 again. Due to generally U-shape of the second connection element 40 of the present embodiment, it should be noted that the connection device 17 is formed by two connectors 67 and two connectors 47 provided as holes through the respective sides of the elements 61, 40 where the first fastening device 97 is connecting the connectors 67, 47 to each other while allowing pivotal movement. As shown in fig. 6, the third axis A3 is indicated as a center line through the fastening device 97. The fastening devices 97 may be a rivet device, a bolt and nut, or other known fastening devices. Preferably, all fastening devices 95, 96, 97, 98 are of the same type. Accordingly, the connection devices 15, 16, 18 may be provided identical to or similar to the third connection device 17 described above.

In fig. 11 it is shown that one of the fastening devices, fastening device 98 comprises a bolt 98a and a nut 98b, which may be connected to each other, for example by a threaded connection or other types of connections.

The connection interface 21 is provided below the first connection device 15, while the second and third connection devices 16, 17 are provided above the first connection device 15.

In the above embodiments, the connectors 35, 36, 45, 47, 56, 58, 67, 68 are all provided as holes or recesses through the respective elements 30, 40, 52, 61, and where the connection devices 15, 16, 17, 18 are comprising the respective connectors together with fastening devices 95, 96, 97, 98. Alternatively, at least some of the connection devices 15, 16, 17, 18 could be provided as pins fixed between the side walls. Alternatively, at least some of the connectors 35, 36, 45, 47, 56, 58, 67, 68 could be provided as threaded openings, where the fastening devices 95, 96, 97, 98 are connected to these threaded openings.

### About the operation of the step platform device

It is now referred to fig. 3, 4 and 5. In fig. 4, it is shown that the step platform device 10 is configured to be provided in a closed state. In this closed state, the ball connection interface 21 may be connected onto the trailer hitch ball of a vehicle. When connected to the trailer hitch ball, a clamping force is applied by the connection interface 21 around the trailer hitch ball 2. In addition, the lower parts 32, 42 is contributing to prevent undesired movement of the step platform device 10 in relation to the trailer hitch ball 2. If it is assumed that the trailer hitch ball is shaped as a normal or standard trailer hitch ball, there will be no relative movement, or it will only be a small relative movement, between the step platform device 10 and the trailer hitch ball. Hence, when connected to the trailer hitch ball, a person may step onto the top surface 51 to access equipment from the roof of the vehicle.

In fig. 5, it is shown that the step platform device 10 is configured to be provided in an open state. In this open state, the ball connection interface 21 may be moved away from the trailer hitch ball 2 and/or to be inserted onto the trailer hitch ball 2.

The step platform device 10 is configured to be brought from the closed state to the open state by moving the first and fourth connection devices 15, 18 away from each other, thereby causing the second and third connection devices 16, 17 to move towards each other. The step platform device 10 is configured to be brought from the open state to the closed state by moving the first and fourth connection devices 15, 18 towards each other, thereby causing the second and third connection devices 16, 17 to move away from each other. The person using the device 10 may then use the handle 69 of the link device 60 in the embodiment in fig. 4 and 5 or the handle 59 of the platform device 50 in the embodiment of fig. 7 and 8.

In one embodiment shown in fig. 4, the fourth axis A4 is provided a distance d below a level P for the second and third axis A2, A3 in the closed state, i.e. the center of the fourth connection device 18 is provided at the distance d below a line P between the centers of the second and third connection devices 16, 17. In this way, it is achieved that the step platform device 10 is locked in the closed state, as it will require a force above a certain threshold value to move the fourth connection device 18 from a point below level P to a point above the level P due to the geometry of the step platform device 10.

In alternative embodiments, the fourth axis A4 may be provided on the same level P as the second and third axis A2, A3 or even above level P. In such embodiments, there might be a risk that the step platform device 10 may fall off the trailer hitch ball 2 during driving. Hence, such embodiments should be only be used while vehicles are stationary.

In yet an alternative, step platform device 10 may comprise a locking device 80 for locking the step platform device 10 in the closed state.

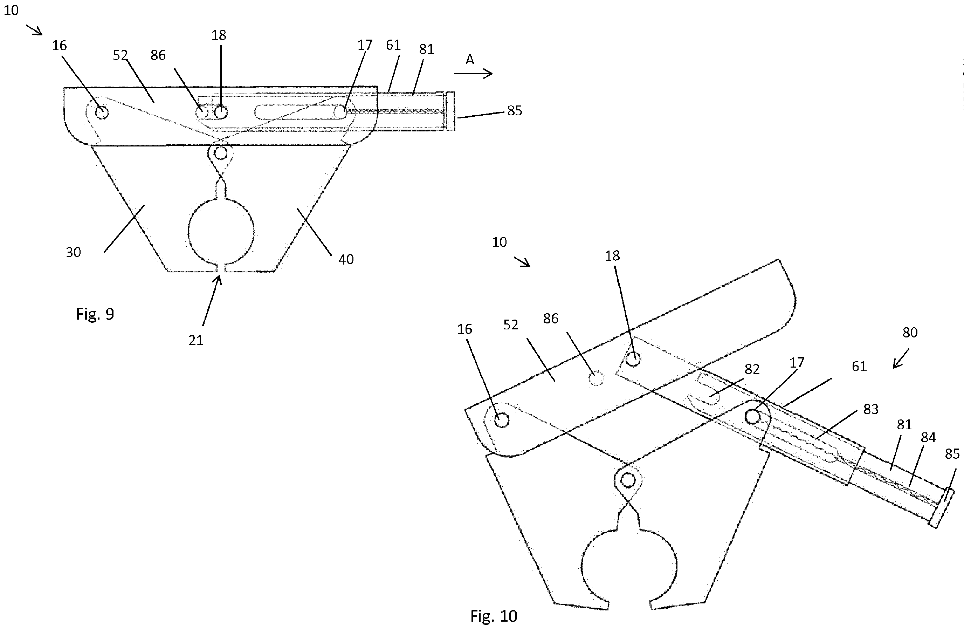

It is now referred to fig. 9, 10 and 11. The locking device 80 here comprises a locking element 81 connected to, and axially displaceable in relation to, the link element 61. In fig. 9 and 10, the locking element 81 is provided inside of the square bar forming the link element 61. The locking element 81 comprises an end recess 82 provided in a first end of the locking element 81. The locking device 80 further comprises a locking bolt 86 fixed between the members 52a, 52b of the platform element 52. The locking bolt 86 is adapted to be received in, and to be engaged in, the end recess 82 of the locking element 81, as shown in fig. 9. A second end, opposite of the first end, of the locking element 81 is protruding out from the link element 61, forming an actuating member 85. Hence, starting from fig. 9, a person may use the actuating member 85 and pull it axially (in the direction A) in relation to the link element, i.e. to the right in fig. 9 at least partially out from the link element 61. This will cause the end recess 82 to be pulled away from engagement with the locking bolt 86 and the device 10 is no longer locked. The actuating member 85 may now serve as a handle similar to handle 69 described above. Moving the actuating member 85 downwards will bring the device 10 to its open state as shown in fig. 10. The actuating member 85 may again be used to bring the device 10 from the open state in fig. 10 and back to the closed state in fig. 9. In the closed state, by pushing the actuating member 85 into the link element 61, the end recess 82 will be engaged with the locking bolt 86 again and the device 10 is locked.

Preferably, the locking element 81 comprises a longitudinal slot 83 for engagement with at least some parts of the third locking device 17, to avoid that the locking element 81 is pulled entirely out from the link element 61. In addition, a spring 84 may be connected between at least some parts of the third locking device 17 and the actuating member 85, causing the locking member 81 to be automatically drawn into the link element 61 if the person releases the actuating member 85. Moreover, the first end of the locking element 81 may be provided with an inclined surface 86. From fig. 10 it is then possible to bring the device 10 to its closed and locked state automatically without using the actuating member 85 only by pressing the platform element 52 downwardly.

It should be noted that in fig. 11, the locking bolt 86 is not shown, as it is provided inside the platform element 52, for example welded or fixed by other means between side walls 52a, 52b.

### Alternative embodiments

Several alternative embodiments have been described above. In the embodiments shown in fig. 3 - 6 and fig. 6, 9 and 10, the first connection device 30 is directly connected to the second connection device 40. A further alternative embodiment is disclosed in fig. 8.

Here, the trailer hitch ball connection device 20 comprises a third connection element 70, where the third connection element 70 is pivotably connected to the first connection element 30 by means of the first connection device 15 and where the third connection element 70 is rigidly or pivotably connected to the second connection device 40 by means of a fifth connection device 19.

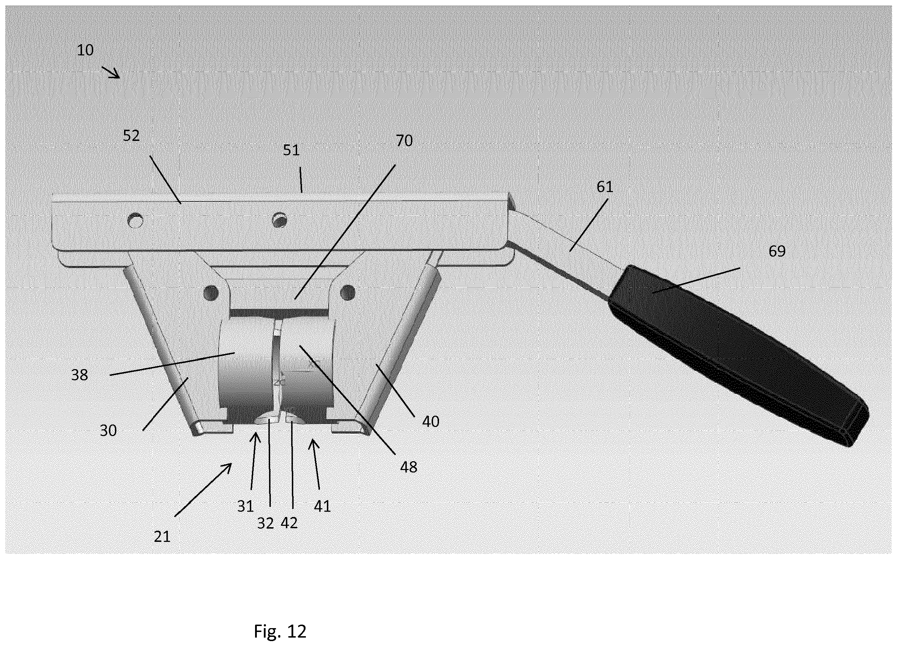

It is now referred to fig. 12. This embodiment is a combination of several of the above embodiments, as it has the handle 69 as of the embodiment in fig. 4 and 5 and the third connection element 70 as of the embodiment in fig. 8. It should be noted that in this embodiment, the handle 69 is provided as a grip-friendly element provided outside the link element 61. The grip-friendly element may be made of rubber, plastic or another suitable material.

Another difference with the embodiment in fig. 12 is that the first and second subinterfaces 31, 41 are provided as pipe sections 38, 48 fixed to the respective first and second connection elements 30, 40. Recesses 32, 42 may be provided in the pipe sections to adapt the subinterfaces 31, 41 to be clamped to the neck section 4 of the trailer hitch 1.

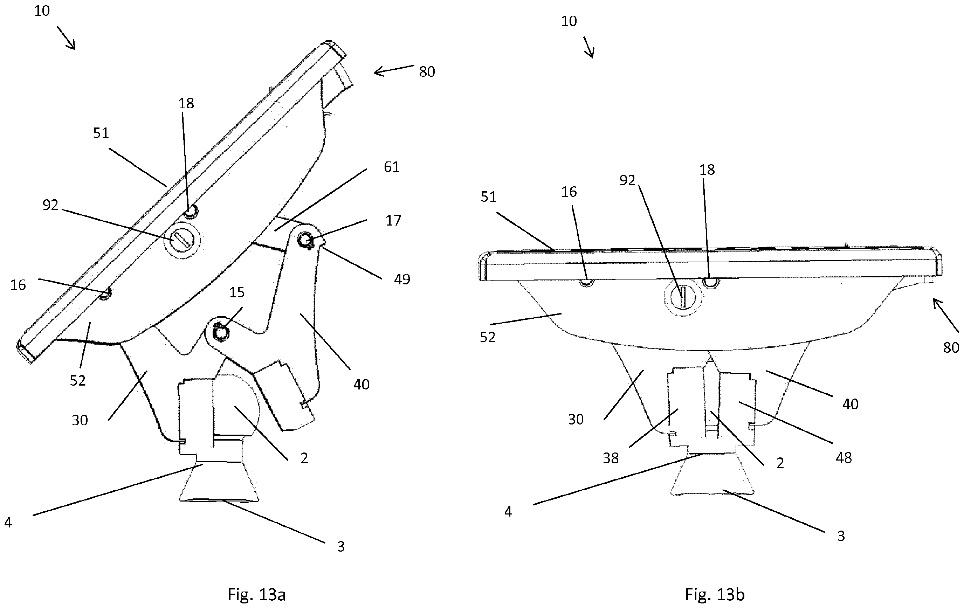

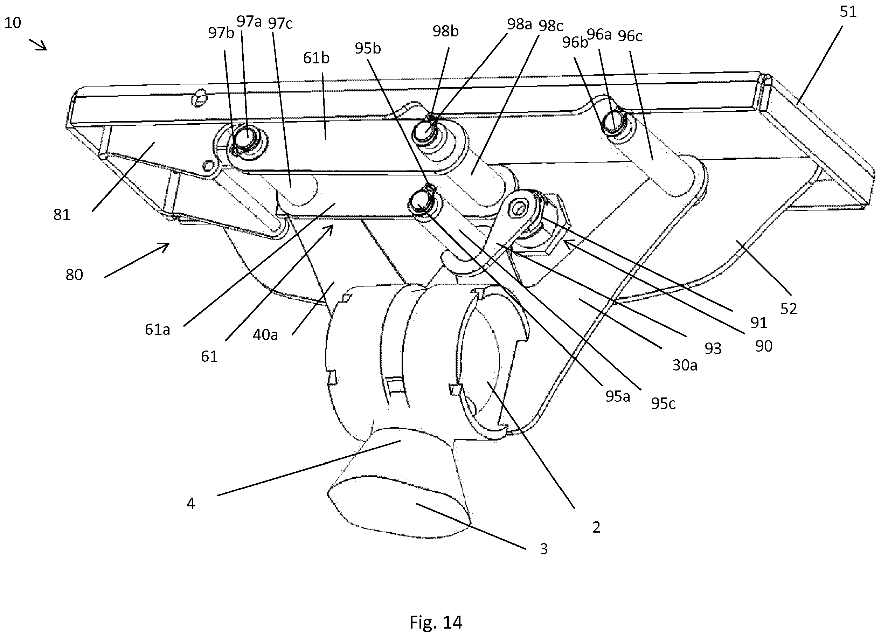

It is now referred to fig. 13a, fig. 13b and fig. 14. Here, the first and second subinterfaces 31, 41 of the first and second connection elements 30, 40 are provided as pipe sections 38, 48 as in the embodiment of fig. 12. However, in this embodiment, the first and second connection elements 30, 40 are not U-shaped in cross section, as the first and second connection elements 30, 40 each comprise two spaced apart side walls 30a, 30b and 40a, 40b, but no cross members 30c, 40c.

In fig. 14, the side walls 30b and 40b are removed.

Also here, the connection devices 15, 16, 17, 18 are comprising connectors in the form of holes through the side surfaces of the respective elements 30, 40, 61, 52 and fastening devices provided in the said holes. The fastening devices here comprises fastening bolts 95a, 96a, 97a, 98a with circlips or C-rings 95b, 96b, 97b, 98b provided in recesses in each end of the fasting bolts (fig. 14).

The distance between the respective side walls 30a, 30b and 40a, 40b are here provided by distance sleeves 95c, 96c, 97c provided around the respective fastening bolts 95a, 96a, 97a (fig. 14).

Also the link element 61 of the link device 60 comprises two spaced apart side walls 61a, 61b separated by means of the distance sleeve 97c and an additional distance sleeve 98c provided around the fastening bolt 98a.

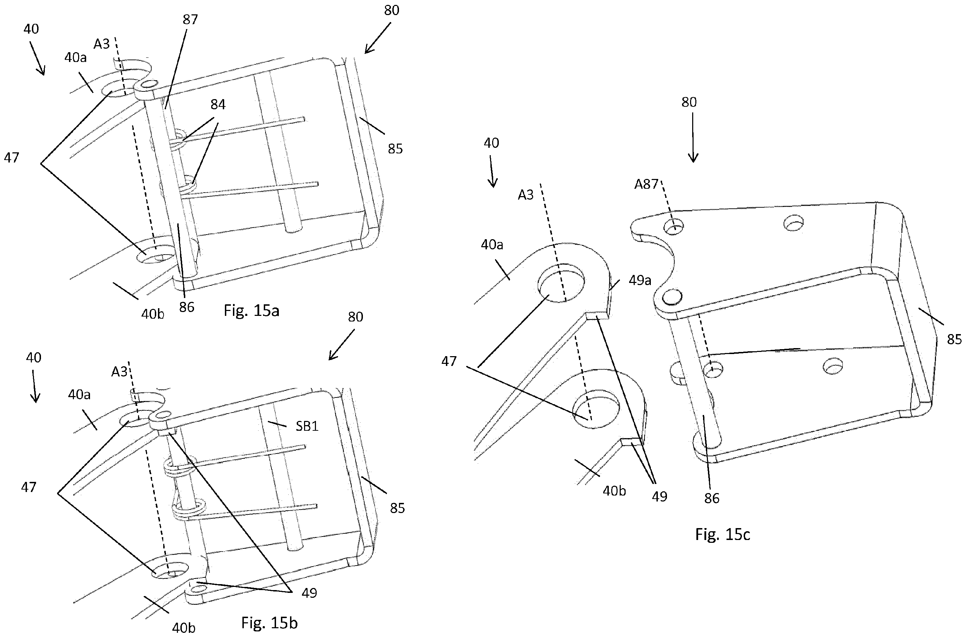

In fig. 14, it is also shown that the device 10 comprises a locking device 80. Here, the locking device 80 comprises a locking element 81 pivotably connected to the platform element 52 by means of a fastening bolt 87. The pivoting axis A87 of the locking element 81 with respect to the platform element 52 is indicated in fig. 15a and 15c. The locking element 81 further comprises a locking bolt 86 at a distance from the fastening bolt 87. The locking bolt 86 is configured to be engageable with a notch 49 of the side walls 40a, 40b of the connection element 40, as shown in fig. 15a. When engaged in the locked state, rotation of the locking element 40 around axis A3 with respect to the link element 61 is prevented, and hence, the device 10 is in its locked state. The locking device 80 further comprises an actuator member 85 formed as a part of the locking element 81 itself. When the actuator member 85 is pressed upwards in fig. 13b and rotated around the axis A87 in fig. 15c, then the locking bolt 86 is moved out of engagement with the notch 49, thereby bringing the device 10 to its unlocked state, in which further movement of the actuator member 85 together with the platform element 52 will bring the device 10 to its open state. When closing the device 10 around the hitch ball 2, the locking bolt 86 will slide along a partially curved surface 49a until the locking bolt 86 gets engaged with the notch 49 again, thereby bringing the device 10 to its locked state.

A spring device 84 may be provided around the bolt 87 and biased with respect to a spring bolt SB1 and the platform element 52, thereby biasing the locking bolt 86 into engagement with the notch 49. Hence, unintentional unlocking of the device 10 is prevented.

It is now referred to fig. 13a, 13b and fig. 14 again, where it is shown that the device 10 further comprises a theft preventing device 90 fixed to the platform element 52. The theft preventing device 90 comprises a locking mechanism 91 with a user interface 92, which in the present embodiment is a key lock with a keyhole. The device 90 further comprises a hook 93 connected to the locking mechanism 91. The hook 93 is connectable to the first fastening device 95 when the device 10 is in the closed state as shown in fig. 14. The hook 93 may for example be hooked onto the bolt 95a or around the sleeve 95c. Rotation of the hook 95 is only possible when the locking mechanism 91 is unlocked, i.e. in this embodiment when a key (not shown) belonging to the locking mechanism 91 has been inserted into the keyhole 92. When the hook 93 is hooked onto the fastening device 95, it is not possible to move the first and fourth connection devices 15, 18 away from each other and hence it is not possible to bring the device 10 from the closed state to the open state.

## Claims

1. Step platform device (10) for connection to a trailer hitch ball (2), the step platform device (10) comprising:
- a trailer hitch ball connection device (20) comprising first and second connection elements (30, 40) pivotably connected to each other by means of a first connection device (15) about a first axis (A1); where the trailer hitch ball connection device (20) comprises a ball connection interface (21) comprising a first subinterface (31) provided on the first connection element (30) and a second subinterface (41) provided on the second connection element (40);
- a platform device (50) provided above the trailer hitch ball connection device (20); where the platform device (50) comprises an upwardly facing step surface (51) and a platform element (52) provided below the step surface (51);
- a link device (60) comprising a link element (61);
- the step platform device (10) is configured to be provided in a closed state and in an open state, where the ball connection interface (21) may be connected onto the trailer hitch ball (2) in the closed state and where the ball connection interface (21) may be moved away from the trailer hitch ball (2) in the open state;
**characterized in that**:
- the platform element (52) and the first connection element (30) are pivotably connected to each other about a second axis (A2) by means of a second connection device (16);
- the link element (61) and the second connection element (40) are pivotably connected to each other about a third axis (A3) by means of a third connection device (17);
- the platform element (52) and the link element (61) are pivotably connected to each other about a fourth axis (A4) by means of a fourth connection device (18);
- the step platform device (10) is configured to be brought from the closed state to the open state by moving the first and fourth connection devices (15, 18) away from each other, thereby causing the second and third connection devices (16, 17) to move towards each other;
- the step platform device (10) is configured to be brought from the open state to the closed state by moving the first and fourth connection devices (15, 18) towards each other, thereby causing the second and third connection devices (16, 17) to move away from each other;
- the connection interface (21) is provided below the first connection device (15) and where the second and third connection devices (16, 17) are provided above the first connection device (15).

2. Step platform device (10) according to claim 1, where the first, second, third and fourth axis (A1, A2, A3, A4) are provided at a distance from each other both in the open state and in the closed state.

3. Step platform device (10) according to claim 1 or 2, where the link element (61) and the platform element (52) are provided substantially in parallel with each other in the closed state.

4. Step platform device (10) according to any one of the above claims, where the fourth axis (A4) is provided a distance d below a level P of the second and third axis (A2, A3) in the closed state.

5. Step platform device (10) according to any one of the above claims, where the platform element (52) comprises a U-shaped bracket, having two spaced apart side walls (52a, 52b) connected to each other by means of a cross member (52c).

6. Step platform device (10) according to any one of the above claims, where the upwardly facing step surface (51) is provided on a top element (54) connected to the platform element (52).

7. Step platform device (10) according to claim 8, where the top element (54) comprises a friction reducing layer.

8. Step platform device (10) according to claim 8 or 9, where the top element (54) is connected to the platform element (52) via a rigid supporting element (55).

9. Step platform device (10) according to any one of claims 1-8, where the link device (60) comprises a handle (69) connected to the link element (61).

10. Step platform device (10) according to any one of claims 1 -9, where a handle (59) is provided in an end of the platform device (50) being distal to the second connection device (16).

11. Step platform device (10) according to any one of the above claims, where the trailer hitch ball connection device (20) comprises a third connection element (70), where the third connection element (70) is pivotably connected to the first connection element (30) by means of the first connection device (15) and where the third connection element (70) is rigidly or pivotably connected to the second connection device (40) by mean of a fifth connection device (19).

12. Step platform device (10) according to any one of the above claims, where the device (10) comprises a locking device (80) for locking the step platform device (10) in the closed state.

13. Step platform device (10) according to any one of the above claims, where the device (10) comprises a locking mechanism (91) and a hook (93) connected to the locking mechanism (91), where the hook (93) is configured to be hooked onto or hooked off the fastening device (95) when the device (10) is in its locked state, thereby preventing a movement of the first and fourth connection devices (15, 18) away from each other.

## Patentansprüche

1. Stufen-Plattformvorrichtung (10) zur Verbindung mit einer Anhängerkupplungs-Kugel (2), wobei die Stufen-Plattformvorrichtung (10) umfasst:
- eine Anhängerkupplungs-Kugel-Verbindungsvorrichtung (20), die erste und zweite Verbindungselemente (30, 40) umfasst, die mittels einer ersten Verbindungsvorrichtung (15) um eine erste Achse (A1) schwenkbar miteinander verbunden sind; wobei Anhängerkupplungs-Kugel-Verbindungsvorrichtung (20) eine Kugelverbindungsschnittstelle (21) umfasst, die eine erste Unter-Schnittstelle (31), die an dem ersten Verbindungselement (30) vorgesehen ist, und eine zweite Unter-Schnittstelle (41), die an dem zweiten Verbindungselement (40) vorgesehen ist, umfasst;
- eine Plattformvorrichtung (50), die oberhalb der Anhängerkupplungs-Kugel-Verbindungsvorrichtung (20) vorgesehen ist; wobei die Plattformvorrichtung (50) eine nach oben gerichtete Stufenfläche (51) und ein Plattformelement (52), das unterhalb der Stufenfläche (51) vorgesehen ist, umfasst;
- eine Verbindungseinrichtung (60) mit einem Verbindungseinrichtungselement (61);
- wobei die Stufen-Plattformvorrichtung (10) so konfiguriert ist, dass sie in einem geschlossenen Zustand und in einem offenen Zustand bereitgestellt wird, wobei die Kugelverbindungsschnittstelle (21) im geschlossenen Zustand an die Kugel (2) der Anhängerkupplung angeschlossen werden kann und wobei die Kugelverbindungsschnittstelle (21) im offenen Zustand von der Kugel (2) der Anhängerkupplung wegbewegt werden kann;
**dadurch gekennzeichnet, dass**:
- das Plattformelement (52) und das erste Verbindungselement (30) um eine zweite Achse (A2) mittels einer zweiten Verbindungsvorrichtung (16) schwenkbar miteinander verbunden sind;
- das Verbindungeinrichtungselement (61) und das zweite Verbindungselement (40) um eine dritte Achse (A3) mittels einer dritten Verbindungsvorrichtung (17) schwenkbar miteinander verbunden sind;
- das Plattformelement (52) und das Verbindungseinrichtungselement (61) um eine vierte Achse (A4) mittels einer vierten Verbindungsvorrichtung (18) schwenkbar miteinander verbunden sind;
- die Stufen-Plattformvorrichtung (10) so konfiguriert ist, dass sie aus dem geschlossenen Zustand in den offenen Zustand gebracht wird, indem die erste und die vierte Verbindungsvorrichtung (15, 18) voneinander weg bewegt werden, wodurch die zweite und die dritte Verbindungsvorrichtung (16, 17) veranlasst werden, sich aufeinander zu bewegen;
- die Stufen-Plattformvorrichtung (10) so konfiguriert ist, dass sie von dem offenen Zustand in den geschlossenen Zustand gebracht werden kann, indem die erste und vierte Verbindungsvorrichtung (15, 18) aufeinander zu bewegt werden, wodurch die zweite und dritte Verbindungsvorrichtung (16, 17) veranlasst werden, sich voneinander weg zu bewegen;
- die Verbindungsschnittstelle (21) unterhalb der ersten Verbindungsvorrichtung (15) vorgesehen ist und wobei die zweite und dritte Verbindungsvorrichtung (16, 17) oberhalb der ersten Verbindungsvorrichtung (15) vorgesehen sind.

2. Stufen-Plattformvorrichtung (10) nach Anspruch 1, bei der die erste, zweite, dritte und vierte Achse (A1, A2, A3, A4) sowohl im geöffneten als auch im geschlossenen Zustand in einem Abstand voneinander angeordnet sind.

3. Stufen-Plattformvorrichtung (10) nach Anspruch 1 oder 2, wobei das Verbindungseinrichtungselement (61) und das Plattformelement (52) im geschlossenen Zustand im Wesentlichen parallel zueinander angeordnet sind.

4. Stufen-Plattformvorrichtung (10) nach einem der vorhergehenden Ansprüche, wobei die vierte Achse (A4) im geschlossenen Zustand in einem Abstand d unterhalb eines Niveaus P der zweiten und dritten Achse (A2, A3) vorgesehen ist.

5. Stufen-Plattformvorrichtung (10) nach einem der vorhergehenden Ansprüche, wobei das Plattformelement (52) eine U-förmige Klammer mit zwei beabstandeten Seitenwänden (52a, 52b) aufweist, die durch ein Querteil (52c) miteinander verbunden sind.

6. Stufen-Plattformvorrichtung (10) nach einem der vorhergehenden Ansprüche, wobei die nach oben gerichtete Stufenfläche (51) auf einem mit dem Plattformelement (52) verbundenen oberen Element (54) vorgesehen ist.

7. Stufen-Plattformvorrichtung (10) nach Anspruch 8, wobei das obere Element (54) eine reibungsvermindernde Schicht aufweist.

8. Stufen-Plattformvorrichtung (10) nach Anspruch 8 oder 9, wobei das obere Element (54) über ein starres Stützelement (55) mit dem Plattformelement (52) verbunden ist.

9. Stufen-Plattformvorrichtung (10) nach einem der Ansprüche 1 bis 8, wobei die Verbindungseinrichtung (60) einen Griff (69) umfasst, der mit dem Verbindungseinrichtungselement (61) verbunden ist.

10. Stufen-Plattformvorrichtung (10) nach einem der Ansprüche 1 bis 9, wobei ein Griff (59) an einem Ende der Plattform-Vorrichtung (50) vorgesehen ist, das sich distal zur zweiten Verbindungsvorrichtung (16) befindet.

11. Stufen-Plattformvorrichtung (10) nach einem der vorhergehenden Ansprüche, wobei die Anhängerkupplungs-Kugel-Verbindungsvorrichtung ein drittes Verbindungselement (70) aufweist,
wobei das dritte Verbindungselement (70) mittels der ersten Verbindungsvorrichtung (15) schwenkbar mit dem ersten Verbindungselement (30) verbunden ist und wobei das dritte Verbindungselement (70) mittels einer fünften Verbindungsvorrichtung (19) starr oder schwenkbar mit der zweiten Verbindungsvorrichtung (40) verbunden ist.

12. Stufen-Plattformvorrichtung (10) nach einem der vorhergehenden Ansprüche, wobei die Vorrichtung (10) eine Verriegelungsvorrichtung (80) zum Verriegeln der Trittbrettvorrichtung (10) im geschlossenen Zustand umfasst.

13. Stufen-Plattformvorrichtung (10) nach einem der vorhergehenden Ansprüche, wobei die Vorrichtung (10) einen Verriegelungsmechanismus (91) und einen mit dem Verriegelungsmechanismus (91) verbundenen Haken (93) umfasst, wobei der Haken (93) so konfiguriert ist, dass er an der Befestigungsvorrichtung (95) eingehakt oder ausgehakt werden kann, wenn sich die Vorrichtung (10) in ihrem verriegelten Zustand befindet, wobei dadurch eine Bewegung der ersten und vierten Anschlussvorrichtung (15, 18) voneinander weg verhindert wird.

## Revendications

1. Dispositif de plateforme de marche (10) pour le raccordement à une boule d'attelage de remorque (2), le dispositif de plateforme de marche (10) comprenant :
- un dispositif de raccordement de boule d'attelage de remorque (20) comprenant des premier et second éléments de raccordement (30, 40) raccordés de manière pivotante l'un à l'autre au moyen d'un premier dispositif de raccordement (15) autour d'un premier axe (A1) ; où le dispositif de raccordement de boule d'attelage de remorque (20) comprend une interface de raccordement de boule (21) comprenant une première sous-interface (31) prévue sur le premier élément de raccordement (30) et une seconde sous-interface (41) prévue sur le second élément de raccordement (40) ;
- un dispositif de plateforme (50) prévu au-dessus du dispositif de raccordement de boule d'attelage de remorque (20) ; où le dispositif de plateforme (50) comprend une surface de marche tournée vers le haut (51) et un élément de plateforme (52) prévu sous la surface de marche (51) ;
- un dispositif de liaison (60) comprenant un élément de liaison (61) ;
- le dispositif de plateforme de marche (10) est configuré pour être prévu dans un état fermé et dans un état ouvert, où l'interface de raccordement de boule (21) peut être raccordée sur la boule d'attelage de remorque (2) dans l'état fermé et où l'interface de raccordement de boule (21) peut être éloignée de la boule d'attelage de remorque (2) dans l'état ouvert ;
**caractérisé en ce que** :
- l'élément de plateforme (52) et le premier élément de raccordement (30) sont raccordés de manière pivotante l'un à l'autre autour d'un deuxième axe (A2) au moyen d'un second dispositif de raccordement (16) ;
- l'élément de liaison (61) et le second élément de raccordement (40) sont raccordés de manière pivotante l'un à l'autre autour d'un troisième axe (A3) au moyen d'un troisième dispositif de raccordement (17) ;
- l'élément de plateforme (52) et l'élément de liaison (61) sont raccordés de manière pivotante l'un à l'autre autour d'un quatrième axe (A4) au moyen d'un quatrième dispositif de raccordement (18) ;
- le dispositif de plateforme de marche (10) est configuré pour être amené de l'état fermé à l'état ouvert par éloignement des premier et quatrième dispositifs de raccordement (15, 18) l'un de l'autre, amenant ainsi les deuxième et troisième dispositifs de raccordement (16, 17) à se déplacer l'un vers l'autre ;
- le dispositif de plateforme de marche (10) est configuré pour être amené de l'état ouvert à l'état fermé par déplacement des premier et quatrième dispositifs de raccordement (15, 18) l'un vers l'autre, amenant ainsi les deuxième et troisième dispositifs de raccordement (16, 17) à s'éloigner l'un de l'autre ;
- l'interface de raccordement (21) est prévue sous le premier dispositif de raccordement (15) et où les deuxième et troisième dispositifs de raccordement (16, 17) sont prévus au-dessus du premier dispositif de raccordement (15).

2. Dispositif de plateforme de marche (10) selon la revendication 1, où les premier, deuxième, troisième et quatrième axes (A1, A2, A3, A4) sont prévus à une distance les uns des autres à la fois dans l'état ouvert et dans l'état fermé.

3. Dispositif de plateforme de marche (10) selon la revendication 1 ou 2, où l'élément de liaison (61) et l'élément de plateforme (52) sont prévus sensiblement parallèlement l'un à l'autre dans l'état fermé.

4. Dispositif de plateforme de marche (10) selon l'une quelconque des revendications précédentes, où le quatrième axe (A4) est prévu à une distance d sous un niveau P des deuxième et troisième axes (A2, A3) dans l'état fermé.

5. Dispositif de plateforme de marche (10) selon l'une quelconque des revendications précédentes, où l'élément de plateforme (52) comprend un support en forme de U, présentant deux parois latérales espacées (52a, 52b) raccordées l'une à l'autre au moyen d'un élément transversal (52c).

6. Dispositif de plateforme de marche (10) selon l'une quelconque des revendications précédentes, où la surface de marche tournée vers le haut (51) est prévue sur un élément supérieur (54) raccordé à l'élément de plateforme (52).

7. Dispositif de plateforme de marche (10) selon la revendication 8, où l'élément supérieur (54) comprend une couche de réduction de friction.

8. Dispositif de plateforme de marche (10) selon la revendication 8 ou 9, où l'élément supérieur (54) est raccordé à l'élément de plateforme (52) via un élément de support rigide (55).

9. Dispositif de plateforme de marche (10) selon l'une quelconque des revendications 1 à 8, où le dispositif de liaison (60) comprend un manche (69) raccordé à l'élément de liaison (61).

10. Dispositif de plateforme de marche (10) selon l'une quelconque des revendications 1 à 9, où un manche (59) est prévu dans une extrémité du dispositif de plateforme (50) qui est distal du second dispositif de raccordement (16).

11. Dispositif de plateforme de marche (10) selon l'une quelconque des revendications précédentes, où le dispositif de raccordement de boule d'attelage de remorque (20) comprend un troisième élément de raccordement (70), où le troisième élément de raccordement (70) est raccordé de manière pivotante au premier élément de raccordement (30) au moyen du premier dispositif de raccordement (15) et où le troisième élément de raccordement (70) est raccordé de manière rigide ou pivotante au deuxième dispositif de raccordement (40) au moyen d'un cinquième dispositif de raccordement (19).

12. Dispositif de plateforme de marche (10) selon l'une quelconque des revendications précédentes, où le dispositif (10) comprend un dispositif de verrouillage (80) pour le verrouillage du dispositif de plateforme de marche (10) dans l'état fermé.

13. Dispositif de plateforme de marche (10) selon l'une quelconque des revendications précédentes, où le dispositif (10) comprend un mécanisme de verrouillage (91) et un crochet (93) raccordé au mécanisme de verrouillage (91), où le crochet (93) est configuré pour être accroché sur ou décroché du dispositif de fixation (95) lorsque le dispositif (10) est dans son état verrouillé, empêchant ainsi un éloignement des premier et quatrième dispositifs de raccordement (15, 18) l'un de l'autre.
